# EUROPÄISCHE PATENTSCHRIFT

(11) **EP 1 048 883 B1**
(45) Veröffentlichungstag und Bekanntmachung des Hinweises auf die Patenterteilung: **03.11.2004**
(21) Anmeldenummer: 99110014.0
(22) Anmeldetag: 21.05.1999
(51) Int. Cl.: F16L 21/08

(54) **Rohrkupplung**
Pipe coupling
Raccord de tuyaux

(30) Priorität: 30.04.1999 DE 19919728
(43) Veröffentlichungstag der Anmeldung: 02.11.2000
(73) Patentinhaber: Sikla GmbH & Co. KG, 78595 Hausen o.V. (DE)
(72) Erfinder: Wolfsdorf, Klaus D., 78588 Denkingen (DE)
(74) Vertreter: Sparing Röhl Henseler Patentanwälte

(56) Entgegenhaltungen:
- DE-C- 4 428 570
- DE-U- 9 310 712
- GB-A- 1 001 520
- US-A- 4 045 060

## Beschreibung

Die Erfindung betrifft eine Rohrkupplung nach Anspruch 1.

Eine Rohrkupplung ist aus DE 197 19 066 C1 bekannt und umfaßt eine Dichtungshülse, die eine Dichtung aufnimmt und innerhalb eines Stützkörpers angeordnet ist, wobei der Stützkörper zumindest benachbart zu einer Seite der Dichtungshülse Sicherungselemente für ein Ende eines eingesteckten Rohrs abstützt, die bei Auszugsbeanspruchung mit dem eingesteckten Rohr unter radialer Aufrichtung verkrallbar sind. Bei den Sicherungselementen handelt es sich um sich am Stützkörper abstützende, rechteckige Spannplatten, die über sich am Stützkörper abstützende Federn in Auszugsrichtung des Rohrs federvorgespannt sind. Hierbei werden die Spannplatten von dem in seinem Mittelteil aus sich axial erstreckenden Laschen gebildeten Stützkörper herausschiebbar aufgenommen. Diese Konstruktion ist relativ aufwendig in bezug auf die Anzahl von Bauteilen sowie die Vormontage als auch die endgültige Montage beim Kuppeln von Rohren.

Aus DE 44 28 570 C1 ist ferner eine Rohrkupplung bekannt, bei der eine relativ komplizierte, als Gußteil auszuführende Verbindungsmuffe vorgesehen ist, die eine Innenbearbeitung erfordernde Innennuten zur Aufnahme von Dichtungsmanschetten aufweist und mit Durchgangsbohrungen quer zur Längsachse versehen ist, die zur Aufnahme von Spanneinheiten dienen. Letztere können aus einer Spannschraube und zwei hiermit verstellbaren Sicherungselementen in Form von Schneidrippen aufweisenden Klemmkeilen oder -hülsen bestehen, die über die Spannschraube gegen das eingeschobene Rohr verspannbar sind. Allerdings wären die Spanneinheiten in den Durchgangsbohrungen verschiebbar, wenn man sie vormontieren würde, und könnten dann das Einführen des Rohrs behindern. Insofern ist auch diese Rohrkupplung aufwendig und umständlich zu Montieren.

Aufgabe der Erfindung ist es, eine Rohrkupplung zu schaffen, die mit geringem Aufwand vormontiert herstellbar und leicht montierbar ist.

Diese Aufgabe wird entsprechend den Merkmalen des Anspruchs 1 gelöst

Dadurch, daß eine eine Dichtung enthaltende Dichtungshülse als dementsprechende Baueinheit vormontiert von einer Außenhülse aufgenommen wird, wird eine autarke, druckaufnehmende, die Vormontage erleichternde Dichtungseinheit gebildet. Dadurch, daß innenseitig von der Außenhülse wenigstens ein Paar von gegeneinander federvorgespannten Sicherungselementen in Form von Klemmelementen aufgenommen wird, das über eine durch die Außenhülse geführte Spannschraube quer zur Achse der Druckkupplung gegen das eingesteckte Rohrende verspannbar ist, wobei die Sicherungselemente in Verspannrichtung in der Außenhülse geführt sind, läßt sich die gesamte Rohrkupplung aus relativ wenigen Teilen vormontieren, wobei außerdem die Sicherungselemente aufgrund ihrer Federvorspannung die eigentliche Montage nicht beeinträchtigen, da die zu verbindenden Rohre hiervon ungehindert in die Rohrkupplung eingeschoben werden können, da die Paare von Sicherungselementen durch die Federvorspannung bezüglich des Rohrs selbstzentrierend angeordnet sind. Außerdem werden beim Kuppeln die Sicherungselemente durch das jeweilige Rohrende nach außen gegen die Außenhülse gedrückt und dadurch zusätzlich verklemmt, wobei diese Wirkung durch Innendruckbeaufschlagung der Rohre verstärkt wird.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt im Axialschnitt ein Ausführungsbeispiel einer Rohrkupplung.
Fig. 2 zeigt teilweise aufgeschnitten eine Stirnseite der Rohrkupplung von Fig. 1.
Fig. 3 zeigt eine Ausführungsform einer Spanneinheit, wie sie bei der Rohrkupplung von Fig. 1 vorgesehen ist.
Fig. 4 zeigt im Axialschnitt eine weitere Ausführungsform einer Rohrkupplung.
Fig. 5 zeigt die Rohrkupplung von Fig. 4 in einer Ansicht entsprechend Fig. 2.
Fig. 6 zeigt eine weitere Ausführungsform einer Spanneinheit, wie sie bei der Rohrkupplung von Fig. 4 vorgesehen ist.
Fig. 7 zeigt ausschnittweise eine zusätzliche Ausführungsform einer Rohrkupplung im Axialschnitt.
Fig. 8 zeigt eine Ausführungsform einer Spanneinheit, wie sie bei der Rohrkupplung von Fig. 7 vorgesehen ist.
Fig. 9 zeigt ein weiteres Ausführungsbeispiel einer Rohrkupplung im Axialschnitt.

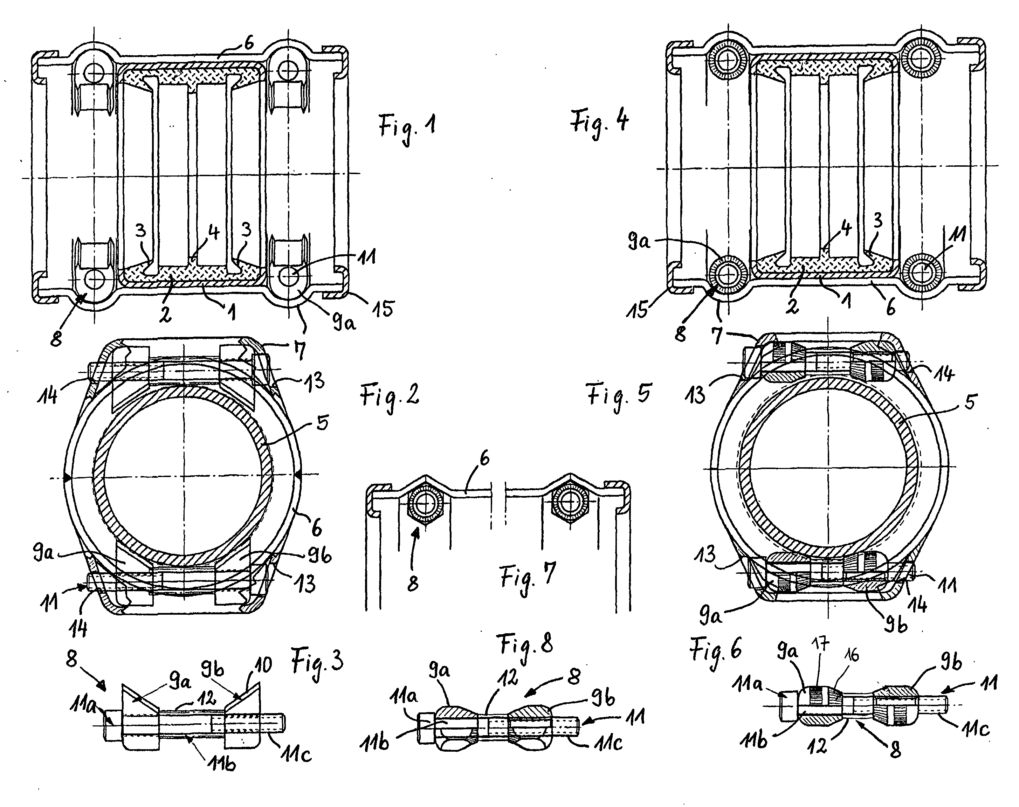

Die in Fig. 1 und 2 dargestellte Rohrkupplung umfaßt eine außenseitig geschlossene Dichtungshülse 1, deren Inneres eine Dichtungskammer bildet, die eine als Lippendichtring ausgebildete Dichtungsmanschette 2 aufnimmt. Letztere besitzt beidseitig am Innenumfang jeweils eine Dichtungslippe 3 und mittig einen sich radial einwärts erstreckenden, von Abstützschultern umgebenen Anschlagring 4 für zwei von der Rohrkupplung aufzunehmenden Enden von zu verbindenden Rohren 5, wobei der Innendurchmesser des Anschlagrings 4 größer als derjenige der Rohre 5 oder gleich diesem ist.

Die die Dichtungsmanschette 2 tragende Dichtungshülse 1 ist axial mittig in eine als Gehäuse dienende Außenhülse 6 unter Vorspannung eingesetzt und wird damit in dieser gehalten.

Die Außenhülse 6 ist ein relativ dünnwandiges Blechformteil, das aus zwei beispielsweise miteinander verschweißten Halbschalen gebildet sein kann. Die Außenhülse 6 besitzt - im dargestellten Ausführungsbeispiel beidseitig - benachbart zu der Dichtungshülse 1 jeweils zwei gegenüberliegende, zueinander parallele Aufwölbungen 7, deren Innenfläche jeweils eine Führung für eine Spanneinheit 8 bilden.

Jede Spanneinheit 8 umfaßt zwei Spannelemente 9a, 9b, die bei der Ausführungsform gemäß den Fig. 1 bis 3 als Klemmkeile mit dem Umfang des einzuklemmenden Rohrs 5 zugewandten und dazu im wesentlichen tangential angeordneten Schneidrippen 10 ausgebildet sind. Die beiden Spannelemente 9a, 9b sind auf einer Spannschraube 11 angeordnet, wobei sich ein Spannelement 9a benachbart zum Kopf 11a der Spannschraube 11 auf einem gewindefreien Abschnitt 11 b der Spannschraube 11 befindet, während das andere Spannelement 9b auf den Gewindeendabschnitt 11c der Spannschraube 11 aufgeschraubt ist. Zischen den beiden Spannelementen 9a, 9b befindet sich eine Schraubenfeder 12 (schematisch angedeutet), die das Spannelement 9a gegen den Kopf 11a der Spannschraube 11 drückt.

Die Außenhülse 6 ist im Seitenbereich der Auswölbungen 7 an einer Seite mit einer Durchtrittsöffnung 13 für den Kopf 11a der Spannschraube 11 und an der gegenüberliegenden Seite mit einer Durchtrittsöffnung 14 für den Gewindeendabschnitt 11c der Spannschraube 11 versehen, wobei die Durchtrittsöffnungen 13, 14 einen entsprechenden spielbelassenden Durchmesser für den Kopf 11 a bzw. den Gewindeabschnitt 11 c aufweisen.

Die Rohrkupplung kann dementsprechend insgesamt vormontiert werden.

Infolge der gegeneinander federvorgespannten Spannelemente 9a, 9b wird die vormontierte Spanneinheit 8 in der Außenhülse 6 zentriert und gehalten, wobei die Spannschraube 11 beidseitig aus der Außenhülse 6 etwas herausragt.

Wird ein Rohr 5 eingeschoben, so wird dieses durch Drehen der Spannschraube 11 durch die Spanneinheit 8 eingespannt, wobei sich letztere automatisch zum Rohr 5 zentriert. Die Länge der Spannschraube 11 wird zweckmäßigerweise derart bemessen, daß ihr Kopf 11 a bei eingespanntem Rohr 5 von der Außenhülse 6 aufgenommen ist, wodurch zugleich eine visuelle Überwachung der Montage ermöglicht wird.

Die Spanneinheiten 8 können sich gegebenenfalls zusätzlich an den seitlichen Schultern der Dichtungshülse 1 abstützen.

Zweckmäßigerweise kann die Außenhülse 6 benachbart zu der Spanneinheit 8 stirnseitig jeweils einen Führungsring 15 für das einzusteckende Rohr tragen, der in diesem Ausführungsbeispiel die Außenhülse 6 umfaßt und damit einem Aufwölben der Außenhülse 6 beim Einspannen des Rohrs 5 entgegenwirken kann.

Die Spannelemente 9a, 9b können gemäß der Ausführungsform der Fig. 4 bis 6 auch als Spannhülsen ausgebildet sein, die eine konische, zweckmäßigerweise gerändelte oder mit Schneidrippen versehene Eingriffsfläche 16 zum Eingriff mit der Außenseite des einzuspannenden Rohrs 5 und gegebenenfalls auch eine gerändelte, sich in Umfangsrichtung erstreckende, umlaufende Eingriffsfläche 17 zum Eingriff mit der Außenhülse 6 aufweisen, um die Spannelemente 9a, 9b so gegen Verdrehen beim Drehen der Spannschraube 11 zu sichern.

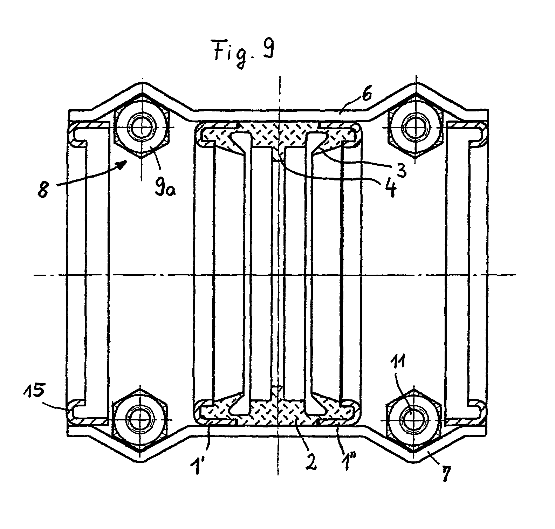

Gemäß der in den Fig. 7 und 8 dargestellten Ausführungsform ist zu diesem Zweck der Außenumfang der als Spannhülsen ausgebildeten Spannelemente 9a, 9b polygonal (hier sechkantig) und in Eingriff mit der korrespondierend geformten Auswölbung 7.

Bei der in Fig. 9 dargestellten Ausführungsform ist die Dichtungsmanschette 2 anstelle ihrer Anordnung in einer Dichtungshülse 1 gemäß Fig. 1 an beiden Seiten jeweils durch einen im Schnitt um wesentlichen J-förmigen Stützring 1', 1" gefaßt. Hierbei handelt es sich um eine sehr kostengünstige Lösung, die allerdings eine genügend steife Außenhülse 6 voraussetzt.

Außerdem sind hierbei die Führungsringe 15 in die Außenhülse 6 eingeklemmt, die aufgrund ihrer Steifheit nicht gegen Aufweiten gesichert werden muß.

## Patentansprüche

1. Rohrkupplung mit einer eine Dichtungskammer begrenzenden Dichtungsanordnung (1, 2; 1', 1", 2), die innerhalb eines Stützkörpers angeordnet ist, der zumindest benachbart zu einer Seite der Dichtungsanordnung (1, 2; 1', 1", 2) Spannelemente (9a, 9b) für ein Ende eines eingesteckten Rohrs (5) abstützt, die mit dem eingesteckten Rohr (5) in Eingriff bringbar sind, wobei die Dichtungsanordnung (1, 2; 1', 1", 2) in einer Außenhülse (6) als Stützkörper aufgenommen ist, die innenseitig wenigstens ein Paar von gegeneinander feder vorgespannten Spannelementen (9a, 9b) in Form von Klemmelementen aufnimmt, das über eine durch die Außenhülse (6) geführte Spannschraube (11) quer zur Achse der Rohrkupplung gegen das Ende des eingesteckten Rohrs (5) verspannbar ist, wobei die Spannelemente (9a, 9b) in Verspannrichtung in der Außenhülse (6) geführt sind.

2. Rohrkupplung nach Anspruch 1, **dadurch gekennzeichnet, daß** die Spannelemente (9a, 9b) Klemmkeile sind.

3. Rohrkupplung nach Anspruch 1 oder 2, **dadurch gekennzeichnet, daß** die Spannelemente (9a, 9b) an der dem Ende des Rohrs (5) zugewandten Seite wenigstens eine Schneidrippe (10) zum Verkrallen mit dem Rohr (5) aufweist.

4. Rohrkupplung nach Anspruch 1 oder 3, **dadurch gekennzeichnet, daß** die Spannelemente (9a, 9b) Klemmhülsen sind.

5. Rohrkupplung nach Anspruch 4, **dadurch gekennzeichnet, daß** die Klemmhülsen gerändelte Eingriffsflächen (16 bzw. 17) aufweisen.

6. Rohrkupplung nach einem der Ansprüche 1 bis 5, **dadurch gekennzeichnet, daß** die Spannelemente (9a, 9b) polygonalen Querschnitt aufweisen, wobei die Außenhülse (6) hierzu korrespondierende Führungsflächen besitzt.

7. Rohrkupplung nach einem der Ansprüche 1 bis 6, **dadurch gekennzeichnet, daß** die Außenhülse (6) auf einer Seite für den Kopf (11a) der jeweiligen Spannschraube (11) eine Durchtrittsöffnung (13) und auf der anderen Seite eine Durchtrittsöffnung (14) für den Gewindeschaft (11c) der Spannschraube (11), jeweils mit entsprechendem Durchmesser, aufweist.

8. Rohrkupplung nach einem der Ansprüche 1 bis 7, **dadurch gekennzeichnet, daß** die Länge der Spannschraube (11) derart ist, daß ihr Kopf (11a) im eingespannten Zustand des Rohrs (5) von der Außenhülse (6) im wesentlichen aufgenommen ist.

9. Rohrkupplung nach einem der Ansprüche 1 bis 8, **dadurch gekennzeichnet, daß** die Außenhülse (6) benachbart zu dem wenigstens einen Paar von Spannelementen (9a, 9b) stirnseitig einen Führungsring (15) trägt

10. Rohrkupplung nach Anspruch 9, **dadurch gekennzeichnet, daß** der Führungsring (15) die Außenhülse (6) außenseitig umfaßt.

11. Rohrkupplung nach einem der Ansprüche 1 bis 10, **dadurch gekennzeichnet, daß** die Außenhülse (6) ein Blechformteil ist.

12. Rohrkupplung nach einem der Ansprüche 1 bis 11, **dadurch gekennzeichnet, daß** die Dichtungsanordnung (1, 2; 1', 1", 2) eine Dichtungsmanschette (2) umfaßt, die seitlich durch Stützringe (1', 1") gefaßt oder in einer Dichtungshülse (1) angeordnet ist.

## Claims

1. Pipe coupling having a sealing arrangement (1, 2; 1', 1", 2) which defines a sealing chamber and is arranged inside a supporting body which, at least adjacent to one side of the sealing arrangement (1, 2; 1', 1", 2), supports clamping elements (9a, 9b) for an end of an inserted pipe (5), which clamping elements (9a, 9b) can be brought into engagement with the inserted pipe (5), whereby the sealing arrangement (1, 2; 1', 1", 2) is accommodated in an outer sleeve (6) as supporting body, which on the inside accommodates at least one pair of clamping elements (9a, 9b), in the form of gripping elements, restrained against one another in a springloaded manner, which pair of clamping elements (9a, 9b) can be restrained against the end of the inserted pipe (5) transversely to the axis of the pipe coupling via the clamping screw (11) passed through the outer sleeve (6), the clamping elements (9a, 9b) being guided in the restraining direction in the outer sleeve (6).

2. Pipe coupling according to Claim 1, **characterized in that** the clamping elements (9a, 9b) are clamping wedges.

3. Pipe coupling according to Claim 1 or 2, **characterized in that** the clamping elements (9a, 9b), on the side facing the end of the pipe (5), have at least one cutting rib (10) for digging into the pipe (5).

4. Pipe coupling according to Claim 1 or 3, **characterized in that** the clamping elements (9a, 9b) are clamping sleeves.

5. Pipe coupling according to Claim 4, **characterized in that** the damping sleeves have knurled engagement surfaces (16 or 17).

6. Pipe coupling according to one of Claims 1 to 5, **characterized in that** the clamping elements (9a, 9b) have a polygonal cross section, the outer sleeve (6) having guide surfaces corresponding thereto.

7. Pipe coupling according to one of Claims 1 to 6, **characterized in that** the outer sleeve (6) has a passage opening (13) on one side for the head (11 a) of the respective clamping screw (11) and a passage opening (14) on the other side for the threaded shank (11c) of the clamping screw (11), in each case of appropriate diameter.

8. Pipe coupling according to one of Claims 1 to 7, **characterized in that** the length of the clamping screw (11 ) is such that its head (11 a), in the clamped state of the pipe (5), is essentially accommodated by the outer sleeve (6).

9. Pipe coupling according to one of Claims 1 to 8, **characterized in that** the outer sleeve (6), adjacent to the at least one pair of clamping elements (9a, 9b), carries a guide ring (15) at the end faces.

10. Pipe coupling according to Claim 9, **characterized in that** the guide ring (15) encloses the outer sleeve (6) on the outside.

11. Pipe coupling according to one of Claims 1 to 10, **characterized in that** the outer sleeve (6) is a sheet-metal formed part.

12. Pipe coupling according to one of Claims 1 to 11, **characterized in that** the sealing arrangement (1, 2; 1', 1", 2) comprises a sealing collar (2) which is mounted laterally by supporting rings (1', 1 ") or is arranged in a sealing sleeve (1).

## Revendications

1. Raccord de tubes pourvu d'un agencement d'étanchéité (1, 2; 1', 1", 2) délimitant une chambre d'étanchéité qui est agencé à l'intérieur d'un corps d'appui qui supporte au moins à proximité d'une face de l'agencement d'étanchéité (1, 2; 1', 1", 2) des éléments de serrage (9a, 9b) pour une extrémité d'un tube (5) emboîté, qui peuvent être mis en prise avec le tube (5) emboîté, l'agencement d'étanchéité (1, 2; 1', 1", 2) étant logé dans une douille extérieure (6) en tant que corps d'appui, qui reçoit sur sa face intérieure au moins une paire d'éléments de serrage (9a, 9b) respectivement précontraints par ressort l'un par rapport à l'autre, sous la forme d'éléments de blocage, qui peut être déformée par l'intermédiaire d'une vis de serrage (11) guidée au travers de la douille extérieure (6) perpendiculairement à l'axe du raccord de tubes en direction de l'extrémité du tube (5) emboîté, les éléments de serrage (9a, 9b) étant guidés dans le sens de déformation au sein de la douille extérieure.

2. Raccord de tubes selon la revendication 1, **caractérisé en ce que** les éléments de serrage (9a, 9b) sont des clavettes de blocage.

3. Raccord de tubes selon la revendication 1 ou 2, **caractérisé en ce que** les éléments de serrage (9a, 9b) présentent au niveau de la face tournée vers l'extrémité du tube (5) au moins une nervure de coupe (10) destinée au cramponnement avec le tube (5).

4. Raccord de tubes selon la revendication 1 ou 3, **caractérisé en ce que** les éléments de serrage (9a, 9b) sont des douilles de blocage.

5. Raccord de tubes selon la revendication 4, **caractérisé en ce que** les douilles de blocage présentent des surfaces de prise (16 et / ou 17) moletées.

6. Raccord de tubes selon l'une des revendications 1 à 5, **caractérisé en ce que** les éléments de serrage (9a, 9b) présentent une section polygonale, la douille extérieure (6) comportant des surfaces de guidage y correspondant.

7. Raccord de tubes selon l'une des revendications 1 à 6, **caractérisé en ce que** la douille extérieure (6) présente sur une face pour la tête (11a) de la vis de serrage (11) respective un orifice de passage (13) et sur l'autre face un orifice de passage (14) pour la tige filetée (11c) de la vis de serrage (11), respectivement dotés d'un diamètre correspondant.

8. Raccord de tubes selon l'une des revendications 1 à 7, **caractérisé en ce que** la longueur de la vis de serrage (11) est telle que sa tête (11a) est essentiellement logée par la douille extérieure (6) dans l'état serré du tube (5).

9. Raccord de tubes selon l'une des revendications 1 à 8, **caractérisé en ce que** la douille extérieure (6) porte à proximité de au moins une paire d'éléments de serrage (9a, 9b) une bague de guidage (15) sur la face.

10. Raccord de tubes selon la revendication 9, **caractérisé en ce que** la bague de guidage (15) contient la douille extérieure (6) sur la face extérieure.

11. Raccord de tubes selon l'une des revendications 1 à 10, **caractérisé en ce que** la douille extérieure (6) est une pièce usinée en tôle.

12. Raccord de tubes selon l'une des revendications 1 à 11, **caractérisé en ce que** l'agencement d'étanchéité (1, 2; 1', 1", 2) comprend une garniture d'étanchéité (2) qui est prise latéralement à travers des bagues d'appui (1', 1") ou agencée dans une douille d'étanchéité (1).
